Europäisches Patentamt

European Patent Office

Office européen des brevets

(19)

(11) Veröffentlichungsnummer : **0 063 542**
**B1**

## (12) EUROPÄISCHE PATENTSCHRIFT

(45) Veröffentlichungstag der Patentschrift :
28.11.84

(21) Anmeldenummer : 82810137.8

(22) Anmeldetag : 26.03.82

(51) Int. Cl.³ : **A 43 B   5/14, B 62 M   3/08**

(54) **Sportschuh für Radfahrer.**

(30) Priorität : **16.04.81 CH 2542/81**

(43) Veröffentlichungstag der Anmeldung :
**27.10.82 Patentblatt 82/43**

(45) Bekanntmachung des Hinweises auf die Patenterteilung : **28.11.84 Patentblatt 84/48**

(84) Benannte Vertragsstaaten :
**BE DE FR GB IT NL**

(56) Entgegenhaltungen :
**DE-B- 1 942 885**
**FR-A-   995 610**
**FR-A- 1 586 088**
**FR-A- 2 350 803**
**FR-A- 2 464 660**

(73) Patentinhaber : **Schaer, Hugo**
**Im Tuech**
**CH-8416 Flaach (CH)**

(72) Erfinder : **Schaer, Hugo**
**Im Tuech**
**CH-8416 Flaach (CH)**

(74) Vertreter : **Gachnang, Hans Rudolf**
**Algisserstrasse 33**
**CH-8500 Frauenfeld (CH)**

## Beschreibung

Die Erfindung betrifft einen Sportschuh für Radfahrer, insbesondere für Rennradfahrer.

Die heute allgemein bekannten Sportschuhe weisen Sohlen auf, an welchen Metallplättchen angebracht sind, die eine schmale, quer zum Schuh verlaufende schlitzförmige Ausnehmung aufweisen. Die Plättchen werden durch den Fahrer angepasst und befestigt. Diese Arbeit ist aufwendig, und es ist schwierig die ideale Lage ausfindig zu machen. Desweiteren weisen die herkömmlichen Schuhsohlen in Längs- und Querrichtung Wölbungen auf, die sich aus mehreren unterschiedlichen Radien zusammensetzen (FR-A-2 350 803).

Der vorliegenden Erfindung liegt deshalb die Aufgabe zugrunde, einen Schuh zu schaffen, dessen Sohle ideale Bedingungen für die Fusshaltung und nach allen Seiten eine exakte Schuhführung bringt.

Eine weitere Aufgabe besteht darin, die Schuhführung bzw. die gegenseitige Lage von Schuh und Pedal reproduzierbar und leicht ein- und verstellbar zu gestalten.

Eine weitere Aufgabe besteht darin, die Schuhsohle durch die Schuhplatte wesentlich zu versteifen.

Erfindungsgemäss werden diese Aufgaben gemäss Kennzeichen des Anspruches 1 gelöst. Weitere vorteilhafte Lösungen sind den Ansprüchen 2 bis 9 zu entnehmen.

Der erfindungsgemässe Schuh und die dazugehörige Platte zeichnen sich in vorteilhafter Weise in Verbindung mit einem Pedal aus, wie es im BE-A-885 267 beschrieben ist.

Im weiteren lässt sich die Lage des Schuhs leicht und reproduzierbar zum Pedal einstellen.

Ein weiterer Vorteil besteht darin, dass leicht kleine definierte Korrekturen stufenlos vorgenommen werden können.

Durch die gekrümmte Ausbildung der Sohle und der Führungsplatte lässt sich eine Versteifung erreichen, welche die Lebensdauer des Schuhs erhöht.

Durch die flächenmässig grosse Ausdehnung der Führungsplatte wird das Gehen mit dem Schuh bequemer. Eine Reinigung der Sohle vor dem Besteigen des Fahrrades erübrigt sich, weil der schmutzempfindliche herkömmliche Schlitz entfällt.

Anhand eines illustrierten Ausführungsbeispieles wird die Erfindung näher beschrieben.

Es zeigen :

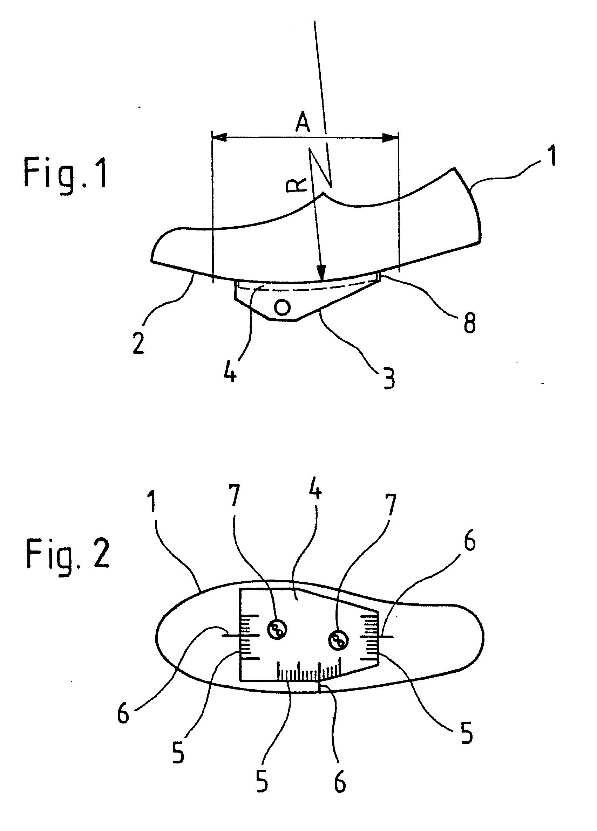

Figur 1  Eine Seitenansicht eines Sportschuhs und eines passenden Pedalkörpers,

Figur 2  Eine Ansicht einer Schuhsohle mit einer Schuhführungsplatte.

Bei einem Schuh 1 von an sich bekanntem Aufbau weist die Sohle 2 im Auflagebereich A eine bogenförmige Krümmung R auf. Der Radius der Krümmung R liegt im Bereich von ca. 120 bis ca. 300 mm, vorzugsweise von ca. 180 bis 280 mm, im speziellen von 200 bis 260 mm, und stimmt im wesentlichen mit der Krümmung der Auflagefläche eines Pedalkörpers 3 überein. Zwischen Schuh 1 und Pedal 3 befindet sich eine Führungsplatte 4, welche eine im wesentlichen spielfreie Führung des Schuhs 1 sicherstellt.

Die Führungsplatte 4 ist längs der Kanten mit Skalen 5 versehen, welche jeweils mit einer entsprechenden Markierung 6 auf der Schuhsohle 2 zusammenwirken. Selbstverständlich können die Skalen 5 auch auf der Sohle 2 und die Markierungen 6 auf der Platte 4 vorgesehen sein. An Stelle der Markierungen 6 kann auch eine Noniusskala vorgesehen sein (nicht eingezeichnet).

Mit zwei Schrauben 7, welche mit seitlichem Spiel die Platte 4 durchdringen ist die Platte 4 mit der Sohle 2 verbunden. Die Technik der Verschraubung ist nicht Gegenstand dieser Erfindung und wird daher nicht näher beschrieben.

Beim Anspassen dieses neuen Schuhs 1 befestigt der Fahrer die Platte 4 lose mit den Schrauben 7 an der Schuhsohle 2 und fährt anschliessend mit der Platte 4 in eine entsprechende Ausnehmung 8 des Pedalkörpers 3. Nun dreht und schiebt er seinen Fuss in die für ihn ideale Stellung und zieht anschliessend die Befestigungsschrauben 7 nach und verbindet damit die Platte 4 mit dem Schuh 1. Auf den Skalen 5 kann er nun leicht die eingestellte Lage ablesen und entsprechend den zweiten Schuh 1 und alle zukünftigen einstellen oder kleine definierte Korrekturen anhand der Skala vornehmen.

Allfällige minimale Abweichungen zwischen der starren Platte 4 und der Schuhsohle 2 durch das gegenseitige Verdrehen werden von der Sohle 2 aufgenommen.

Selbstverständlich kann an einem herkömmlichen Schuh die Sohle entsprechend der oben beschriebenen Ausführung durch aufgiessen ergänzt werden.

## Ansprüche

1. Sportschuh für Radfahrer, insbesondere für Rennradfahrer, mit einer Führungsplatte zur Führung des Schuhs auf dem Pedalkörper, dadurch gekennzeichnet, dass die Schuhsohle (2) des Schuhs (1) im Kontaktbereich (A) mit dem Pedalkörper (3) eine kseiszylindermantel förmige Krümmung (R) aufweist und innerhalb des Bereiches (A) die Führungsplatte (4) verstellbar angebracht ist.

2. Sportschuh für Radfahrer nach Anspruch 1, dadurch gekennzeichnet, dass die Krümmung (R) 120 bis 300 mm, vorzugsweise ca 180 bis 280 mm beträgt, und der gekrümmte Bereich mindestens 80 mm lang ist.

3. Sportschuh für Radfahrer nach Anspruch 1, dadurch gekennzeichnet, dass die Krümmung (R) 230 ± 4 mm beträgt.

4. Sportschuh für Radfahrer nach Anspruch 1, dadurch gekennzeichnet, dass die Führungsplatte (4) mit Einstellskalen (5) versehen ist, die mit entsprechend angebrachten Markierungen oder Noniusskalen (6) auf der Schuhsohle (2) zusammenwirken.

5. Sportschuh für Radfahrer nach Anspruch 1, dadurch gekennzeichnet, dass die Schuhsohle (2) mit Skalen (5) versehen ist, die mit entsprechend angebrachten Markierungen oder Noniusskalen (6) auf der Führungsplatte (4) zusammenwirken.

6. Sportschuh für Radfahrer nach Anspruch 1, dadurch gekennzeichnet, dass die Lage der Führungsplatte (4) durch Lösen einer Verschraubung auf der Sohle (2) ein- und verstellbar ist.

7. Sportschuh für Radfahrer nach Anspruch 1, dadurch gekennzeichnet, dass die Führungsplatte (4) in eine der Kontur der Führungsplatte (4) entsprechende Ausnehmung (8) am Pedalkörper (3) passt.

8. Sportschuh für Radfahrer nach Anspruch 7, dadurch gekennzeichnet, dass die Führungsplatte (4) im wesentlichen annähernd der Ausdehnung des Pedalkörpers (3) entspricht.

9. Sportschuh für Radfahrer nach Anspruch 1, dadurch gekennzeichnet, dass die Führungsplatte (4) die Sohle (2) versteift.

## Claims

1. Sports shoe for cyclists, particularly for racing cyclists, having a guide splate for guiding the shoe on the pedal, characterised in that the sole (2) of the shoe (1) has a curvature (R) — shaped like a jacket of a circular cylinder — in the region of contact (A) with the pedal (3), and the guide plate (4) is adjustably mounted inside the region (A).

2. Sports shoe for cyclists according to claim 1, characterised in that the curvature (R) is 120 mm to 300 mm, preferably approximately 180 mm to 280 mm, and the curved region is at least 80 mm long.

3. Sports shoe for cyclists according to claim 1, characterised in that the curvature (R) is 230 mm ± 4 mm.

4. Sports shoe for cyclists according to claim 1, characterised in that the guide plate (4) is provided with graduated scales (5) which co-operate with suitably provided markings or vernier scales (6) on the sole (2) of the shoe.

5. Sports shoe for cyclists according to claim 1, characterised in that the sole (2) of the shoe is provided with scales (5) which co-operate with suitably provided markings or vernier scales (6) on the guide plate (4).

6. Sports shoe for cyclists according to claim 1, characterised in that the position of the guide plate (4) is adjustable and settable by releasing a screw-connection on the sole (2).

7. Sports shoe for cyclists according to claim 1, characterised in that the guide plate (4) fits into a recess (8) which is provided on the pedal (3) and corresponds to the configuration of the guide plate (4).

8. Sports shoe for cyclists according to claim 7, characterised in that the guide plate (4) corresponds substantially approximately to the dimensions of the pedal (3).

9. Sports shoe for cyclists according to claim 1, characterised in that the guide plate (4) reinforces the sole (2).

## Revendications

1. Chaussure de sport pour cycliste, en particulier pour cycliste de course, comprenant une plaque de guidage destinée à guider la chaussure sur le corps de la pédale, caractérisée en ce que la semelle (2) de la chaussure (1) comprend dans la région de contact (A) avec le corps (3) de la pédale une courbure (R) en forme d'enveloppe cylindrique circulaire, et en ce que la plaque de guidage (4) est montée de façon réglable à l'intérieur de la région (A).

2. Chaussure de sport pour cycliste selon la revendication 1, caractérisée en ce que la courbure (R) est de 120 à 300 mm, et de préférence d'environ 180 à 280 mm, et en ce que la région courbe a une longueur d'au moins 80 mm.

3. Chaussure de sport pour cycliste selon la revendication 1, carctérisée en ce que la courbure (R) est de 230 ± 4 mm.

4. Chaussure de sport pour cycliste selon la revendication 1, caractérisée en ce que la plaque de guidage (4) est munie d'échelles de réglage (5) qui coopèrent avec des marques ou des échelles de vernier correspondantes (6) prévues sur la semelle (2) de la chaussure.

5. Chaussure de spsort pour cycliste selon la revendication 1, caractérisée en ce que la semelle (2) de la chaussure est munie d'échelles (5) qui coopèrent avec des marques ou des échelles de vernier (6) correspondantes prévues sur la plaque de guidage (4).

6. Chaussure de sport pour cycliste selon la revendication 1, caractérisée en ce que la position de la plaque de guidage (4) peut être réglée et déplacée en desserrant un vissage de la semelle (2).

7. Chaussure de sport pour cycliste selon la revendication 1, caractérisée en ce que la plaque de guidage (4) passe par un évidement (8) du corps (3) de la pédale qui correspond au contour de la plaque de guidage (4).

8. Chaussure de sport pour cycliste selon la revendication 7, caractérisée en ce que la plaque de guidage (4) correspond environ sensiblement à la dimension du corps (3) de la pédale.

9. Chaussure de sport pour cycliste selon la revendication 1, la plaque de guidage (4) rend la semelle (2) rigide.

Fig.1

A

R

1

2

4

3

8

Fig. 2

1    7    4    7    6

6

6

5

5

5

6

5